# EUROPEAN PATENT APPLICATION

(11) **EP 2 191 955 A1**
(43) Date of publication of application: **02.06.2010**
(21) Application number: 08170168.2
(22) Date of filing: 28.11.2008
(51) Int. Cl.: B29C 65/20

(54) **Process for butt welding of polypropylene**

(71) Applicant: Borealis AG, 1220 Vienna (AT)
(72) Inventor: Ruemer, Franz, 4222 St. Georgen/Gusen (AT); Goetzloff, Christian, 4030 Linz (AT)
(74) Representative: Brunnbauer, Gerhard

(57) **Abstract**

The invention relates to a process for heated tool butt welding of polypropylene pipes. The novel welding process is performed with PP-HM polypropylene according to EN 1852-1:1997/A1. The novel welding process is in part performed according to DVS 2207-11:1999. The novel process results in an improved stability of the welding joints.

## Description

The invention relates to a process for heated tool butt welding of polypropylene pipes. The novel process results in an improved stability of the welding joints.

### Background of the invention

The importance of piping systems of polyolefins has increased in the last years. Among these, polyethylene and polypropylene are widely used for cold and hot water pipes, pressure and non-pressure pipes, drainage pipes and sewerage.

Before installation a pipe system, individual pipe sections are joined to each other, generally by welding. The welded joints of pipe sections must be able to withstand a certain mechanical bending stress upon installation.

A number of welding techniques is used, including heated tool butt welding (also called butt fusion welding), electro fusion welding, heated tool socket welding, extrusion welding, hot gas welding. Heated tool butt welding is one of the most widely used techniques.

Generally, the procedures and settings which must be followed in heated tool butt welding are specified in DVS 2207-11:1999, which is a welding standard issued by the "Deutscher Verband für Schweissen und verwandte Verfahren e.V.".

It has now been observed, that for pipes from certain polypropylene materials, when they are heated tool butt welded according to DVS 2207-11:1999, the welding joint is not reproducibly able to withstand the required bending angle. Polypropylene materials, where this was observed, are polypropylene PP-HM, as specified in EN 1852-1:1997/A1. The measurement of the bending angle is described in DVS 2203-5:1999.

### Object

It is therefore the object of the present invention to provide a process for heated tool butt welding of polypropylene pipes, having an improved stability of the weldings. The stability of the weldings is thereby determined by measuring the bending angle of the joined pipes.

This object could be achieved with a process of forming a weld between abutting ends of two polypropylene pipes to be joined, which comprises
- an alignment step, wherein said polypropylene pipes are aligned in axial direction and wherein a heated tool is disposed between two ends of said polypropylene pipes such that said ends of said polypropylene pipes abut said heated tool and wherein said ends are pressed in axial direction against said heated tool using an alignment pressure p_{A} during an alignment time t_{A}, followed by
- a heating-up step, wherein each of said ends is pressed in axial direction for a heating-up time t_{H} against said heated tool using a heating-up pressure p_{H}, followed by
- a changeover step, wherein said heated tool is removed from the heated ends of said aligned polypropylene pipes within a changeover time t_{CO}, followed by
- a joining step, consisting of
   - a pressure build-up step, wherein said heated ends of said axially aligned polypropylene pipes are pressed against each other using a joining pressure p_{J}, such that the joining pressure is increased from 0 to the joining pressure p_{J} during a joining pressure build-up time t_{J}, followed by
   - a cooling step, wherein said joined ends of said axially aligned polypropylene pipes are pressed against each other using a cooling pressure p_{C} during a cooling time t_{C},
wherein t_{H} is not greater than 80 % of the heating-up time specified according to DVS 2207-11:1999 for the respective wall thickness and
wherein t_{J} is not greater than 60 % of the joining pressure build-up time specified according to DVS 2207-11:1999 for the respective wall thickness and
wherein the temperature T_{HT} of the heated tool is set to 230 - 245 °C and
wherein the polypropylene pipes consist of a polypropylene composition designated as PP-HM according to EN 1852-1:1997/A1.

According to EN 1852-1:1997/A1 PP-HM materials must have an E-modulus of ≥ 1700 MPa. Also, the required specifications for ring stiffness are higher for PP-HM material compared to normal PP. The standard also specifies, that in order to achieve this high value of modulus of elasticity, the addition of fillers is not allowed.

E-modulus (or, synonymously, Flexural modulus) is determined according to ISO 178 on injection molded specimens.

Surprisingly, the object of the present invention could be achieved with a process as described, where some of the used process parameters are significantly different from the specifications of DVS 2207-11:1999. For example, for pipes having wall thicknesses of between 7 to 12 mm, the DVS 2207-11:1999 specifies heating-up times t_{H} of 175 to 245 seconds. For intermediate values of wall thickness, the DVS 2207-11:1999 specifies that heating-up times and other parameters must also be interpolated. For pipes having a wall thickness of 10 mm this means an interpolated heating-up time t_{H} of 217 s. However, according to the invention, t_{H} must not exceed 80 % of the value specified in DVS 2207-11:1999, i.e. not more than 173.6 s (= 174 s when rounded) for a pipe having 10 mm wall thickness. Sometimes, the "heating-up time" is also just called "heating time".

Further, for pipes having wall thicknesses of between 7 to 12 mm, the DVS 2207-11:1999 specifies a joining pressure build-up time t_{J} of between 7 to 11 seconds, i.e. an interpolated value of 9.4 seconds. According to the invention, the joining pressure build-up time t_{J} must not exceed 60 % of the value specified in DVS 2207-11:1999, i.e. not more than 5.64 s (= 6 seconds when rounded) for a pipe having 10 mm wall thickness.

Further, the DVS 2207-11:1999 specifies a heated tool temperature T_{HT} of 210 ± 10 °C. However, according to the invention, the temperature T_{HT} is from 230 - 245 °C.

It was surprisingly possible to achieve significant improvements in the stability of welding joints for pipes from PP-HM polypropylene by deviating from the settings as prescribed in the standard and by modifying these settings as claimed in the present invention. This is even more surprising since relevant publications stress the fact, that deviating from the standard is not permitted. For example, the publication "Installing plastic pipes", which is published by IPS Flow Systems, and which is available at www.ipsflowsystems.com, mentions for butt fusion welding of polypropylene "The guidelines of DVS2207 part 11 provide accurate advice for successful butt welding, and it should be adhered to at all times."

All the remaining parameters and process settings as specified in DVS 2207-11:1999 for heated tool butt welding are also used in the present invention. The DVS 2207-11:1999 in its entirety is therefore included herein by reference.

The following is a citation from paragraph 4 of DVS 2207-11:1999, wherein the required welding procedure and settings are described.

### "4.3 Welding procedure

*In heated tool butt welding the welding areas are heated to the welding temperature by means of the heated tool and joined under pressure after removal of the heated tool. The heated tool temperature is 210* ± *10* °*C. The different stages of the process are illustrated in Figure 3.*

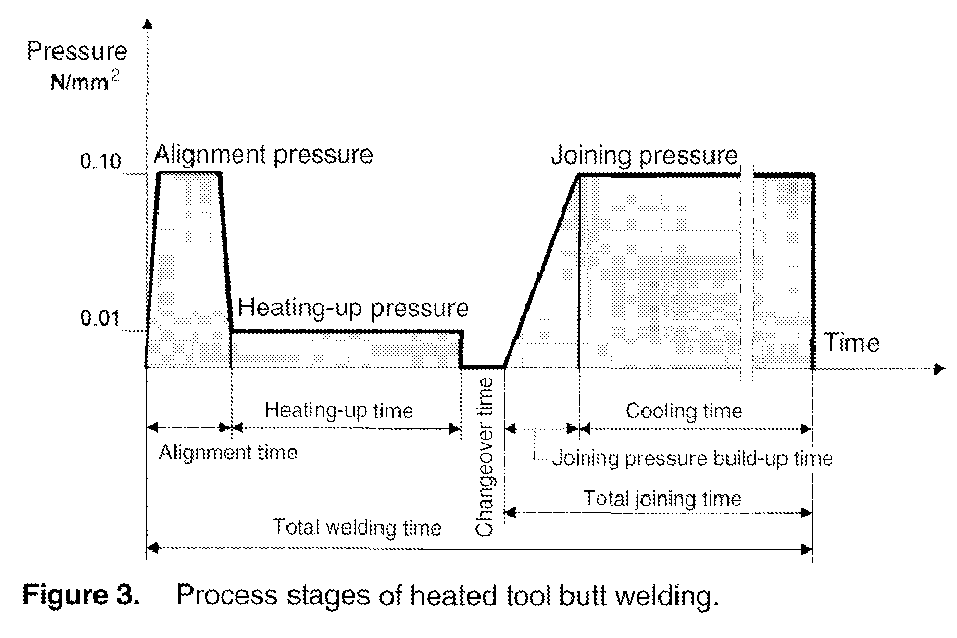

### 4.3.1 Alignment

*The joining areas of the welding components are aligned to the heated tool until all areas are plane-parallel on the heated tool. This fact is visible on the kind of beads. The alignment is finished when the bead heights have reached the mentioned values in table 2, column 2 on the total pipe circumference resp. the total sheet surface. The bead sizes are an index for a complete contact of the joining areas on the heated tool. At larger pipe diameters (> 630 mm) the sufficient bead size also on the pipe's inside has to be controlled at the beginning of the welding works, possibly by a test joint. The alignment pressure of 0.10 MPa effects during the total alignment process.*

**Table 2. Recommended values for the heated tool butt welding of pipes, fittings and sheets out of PP, at an outside temperature of approximately 20°C and moderate air flow (interim values have to be interpolated).**

| 1 | 2 | 3 | 4 | 5 | |
|---|---|---|---|---|---|
| Nominal wall thickness | Alignment | Heating | Removal of heated tool | Joining | |
| | Heated tool temperature 210 ± 10°C | | | | |
| | Bead height on heated tool at the end of the alignment time (alignment under 0.10 N/mm²) | (heating ≤0.01 N/mm²) | | Joining pressure build-up time | Cooling time under joining pressure (p=0.10 N/mm² ±0.01) |
| mm | mm (minimum values) | heating time s | Changeover time s (maximum time) | s | min (minimum values) |
| bis 4.5 | 0.5 | 135 | 5 | 6 | 6 |
| 4.5 ... 7 | 0.5 | 135 ... 175 | 5 ... 6 | 6 ... 7 | 6 ... 12 |
| 7 ... 12 | 1.0 | 175 ... 245 | 6 ... 7 | 7 ... 11 | 12 ... 20 |
| 12 ... 19 | 1.0 | 245. .. 330 | 7 ... 9 | 11 ... 17 | 20 ... 30 |
| 19 ... 26 | 1.5 | 330 ... 400 | 9 ... 11 | 17 ... 22 | 30 ... 40 |
| 26 ...37 | 2.0 | 400 ... 485 | 11 ... 14 | 22 ... 32 | 40 ... 55 |
| 37 ... 50 | 2.5 | 485 ... 560 | 14 ... 17 | 32 ... 43 | 55 ... 70 |

### 4.3.2 Heating

*For heating, the joining areas must contact the heated tool with low pressure. The pressure is reduced to nearly zero (0.01 MPa). During heating, the heat penetrates the joining areas and the welding temperature is reached. Heating times are mentioned in table 2, column 3.*

### 4.3.3 Removal of heated tool

*After heating, the joining areas are to be detached from the heated tool. The heated tool should be withdrawn in such a way that the heated joining areas are neither damaged nor contaminated. The joining areas should be joined together quickly until directly before contact. The changeover time should be as short as possible (see table 2, column 4), as otherwise the plastified areas will cool down. The welding joint quality would be influenced negatively.*

### 4.3.4 Joining

*The areas to be welded should meet with a speed of nearly zero. The demanded joining pressure is built possibly linear. The required times are shown in table 2, column 5. The joining pressure is 0.10* ± *0.01 MPa.*

*The joining pressure has to be kept during the cooling time (see table 2, column 5). Raised mechanical loads during or directly after the remove are allowed only after elongated cooling. Under workshop conditions and low mechanical loading during removal and stock, the cooling times may be reduced especially at components with thick walls. The installation and further treatment may be done only after complete cooling. After the joining, a regular double-bead must appear. The bead size shows the regularity of the weldings."*

With the exception of the heated tool temperature, the heating-up time and the joining pressure build-up time the parameters as specified in DVS 2207-11:1999 are also followed in the present invention.

As it is required by EN 1852-1:1997/A1 for PP-HM polypropylene, the polypropylene composition which is used according to the invention does not contain filler.

Fillers include organic and inorganic materials, like natural silicic acids and silicates like fine-powdery talc, kaolinite, calcined clay, pyrophyllite, sericite and wollastonite, carbonates such as precipitated calcium carbonate, ground limestone and magnesium carbonate, hydroxides such as aluminum hydroxide and magnesium hydroxide, oxides such as zinc oxide, zinc white and magnesium oxide, and synthetic silicic acids or silicates such as hydrated calcium silicate, hydrated aluminum silicate, hydrated silicic acid and silicic anhydride; mica; fibrous fillers, such as basic magnesium sulphate whisker, calcium titanate whisker, aluminium borate whisker, sepiolite, PMF (Processed Mineral Fiber), xonotolite, potassium titanate, ellestadite, glass fibres, carbon fibres, aramid fibres, metallic fibers and fibers from organic polymers having melting or decomposition temperature of > 240 °C, e.g. polyester, regenerated cellulose, e.g. "Rayon", natural fibers, e.g. hemp, sisal, jute, cotton, flax. Fillers further include glass powder, glass beads, fly ash powder, asbestos powder.

In principal, the definition of fillers does not include inorganic or organic pigments, inorganic or organic nucleating agents, processing and temperature stabilisers, UV stabilisers, slip agents and processing aids.

In some cases the distinction whether a substance is a filler or not depends on its concentration. Talc, for example, is used as alpha-nucleating agent in concentrations of from 0.1 - 1.5 wt%. Additional amounts of talc above 1.5 wt% do not have an increased alpha-nucleating effect and its filler properties are becoming more pronounced. Talc concentrations up to 1.5 wt% are not considered as filler in the sense of the present invention.

In its most basic embodiment, it has been proven advantageous for the process of the present invention, when t_{H} is ≤ 80 % of the heating-up time specified according to DVS 2207-11:1999 for the respective wall thickness. More preferably t_{H} is ≤ 70 %, even more preferably t_{H} is ≤ 60 %, typically t_{H} is ≤ 56 % of the heating-up time specified according to DVS 2207-11:1999 for the respective wall thickness.

In its most basic embodiment, it has been proven advantageous for the process of the present invention, when t_{J} is ≤ 60 % of the pressure build-up time specified according to DVS 2207-11:1999 for the respective wall thickness. More preferably t_{J} is ≤ 50 %, even more preferably t_{J} is ≤ 40 %, particularly preferably t_{J} is ≤ 30 %, typically t_{J} is ≤ 25 % of the pressure build-up time specified according to DVS 2207-11:1999 for the respective wall thickness.

According to a preferred embodiment of the present invention, t_{H} is ≤ 60 % of the heating-up time specified according to DVS 2207-11:1999 for the respective wall thickness and t_{J} is ≤ 40 % of the joining pressure build-up time specified according to DVS 2207-11:1999 for the respective wall thickness.

One of the most widely implemented pipes in sewerage applications have a nominal wall thickness of 10 mm. Therefore, according to an embodiment of the present invention, for pipes having a wall thickness of 10 mm, t_{J} is 0.5 - 2 s and t_{H} is 70 - 150 s.

This set of parameters, together with a temperature T_{HT} of the heated tool of 230 - 245 °C has proven to be most advantageous for heated tool butt welding of pipes having a nominal wall thickness of 10 mm.

The requirements which are specified in EN 1852-1:1997/A1 for PP-HM polypropylene (FM ≥ 1700 MPa, Ring Stiffness S 13,3 ≥ 8 kN/m², no fillers) can only be met with polypropylene compositions comprising heterophasic propylene copolymers (PP-B), which are results of specific developments of recent years.

Accordingly, it is appreciated that according to the present invention the polypropylene pipes consist of a polypropylene composition comprising a heterophasic propylene copolymer having an XCS content of 4 - 18 wt% and a melting enthalpy Hₘ of ≥ 90 J/g. Still more preferred is an XCS content of 6 - 15 wt% and a melting enthalpy Hₘ of ≥ 100 J/g.

The content of XCS of the heterophasic propylene copolymer correlates closely with the amount of ethylene-propylene rubber. The melting enthalpy Hₘ of the heterophasic propylene copolymer correlates with the crystallinity of the heterophasic propylene copolymer. Only crystalline fractions of the heterophasic propylene copolymer contribute to Hₘ.

It is also appreciated that according to the present invention, the polypropylene pipes consist of a polypropylene composition comprising a heterophasic propylene copolymer consisting of
A) 80 - 95 wt% of a propylene homopolymer matrix phase having an MFR_{A} of 0.01 - 1.0 g/10 min (2.16 kg/230 °C),
B) 5 - 20 wt% of an ethylene-propylene rubber disperse phase ,
the heterophasic propylene copolymer having an XCS content of 4 - 18 wt%, whereby the XCS content has an ethylene content of 25 - 45 wt% and whereby the XCS content has an intrinsic viscosity IV of ≥ 2.5 dl/g,
the polypropylene composition having an MFR_{AB} of 0.01 - 1.0 g/10 min.

According to the present invention it is preferred that the polypropylene composition comprises > 96 wt% heterophasic propylene copolymer, more preferably > 96 wt%, still more preferably > 97 wt%, most preferred is a proportion of the heterophasic propylene copolymer on the polypropylene composition of > 98 wt%.

The remainder up to 100% is typically taken up by additives, stabilisers, optionally nucleating agents, pigments and it may also comprise polymers which are used in masterbatches, which in turn may contain the mentioned additives, pigments etc.

According to a further embodiment, the polypropylene composition according to the invention comprises less than 4 wt% polymeric components other than the heterophasic propylene copolymer. Preferred are less than 3 wt%, more preferred are less than 2 wt%, and particularly preferred less than 1 wt% of polymeric components other than the heterophasic propylene copolymer.

Typical polymeric modifiers, which are usually used in impact modified polypropylenes in the art are thereby excluded totally or to a great extent. Such modifiers typically include polyethylenes, and ethylene/alpha-olefin elastomers. Their use is disadvantageous in the present invention, because of cost reasons.

According to a preferred embodiment the polypropylene composition of the invention does not contain any ethylene/C₄-C₁₀-alpha-olefin elastomer, in particular no ethylene/1-butene elastomer or ethylene/1-octene elastomer.

According to a further preferred embodiment the polypropylene composition of the invention does not contain any externally added ethylene homopolymer.

According to the invention, the heterophasic propylene copolymer consists of 80 - 95 wt% of a propylene homopolymer and 5 - 20 wt% of an ethylene-propylene rubber. Preferably the amount of propylene homopolymer is 82 -94 wt%, more preferably 84 - 93 wt%, still more preferably 86 - 92 wt%. Accordingly, the preferred amount of ethylene-propylene rubber is 6 - 18 wt%, more preferably 7 -16 wt%, still more preferably 8 - 14 wt%.

A carefully selected ratio of propylene homopolymer to ethylene-propylene rubber within the above specified ranges is required for a good balance of impact strength and stiffness.

The MFR_{A} of the propylene homopolymer is selected such that - together with the other components of the polypropylene composition - the total MFR of the polypropylene composition is within the range which is required for the intended application and which is also specified in EN 1852-1:1997/A1. According to EN1852-1:1997/A1 the MFR of polypropylene pipe materials must be ≤ 1.5 g/10 min. Good processability must be ensured, while maintaining all other desired properties. According to the present invention, the MFR_{A} of the propylene homopolymer is from 0.01 - 1.0 g/10 min, preferably MFR_{A} of the propylene homopolymer is from 0.05 - 0.8 g/10 min, more preferably 0.10 - 0.60 g/10 min, still more preferably 0.15 - 0.50 g/10 min, most preferably 0.20 - 0.45 g/10 min.

The MFR_{AB} of the heterophasic propylene copolymer is the result of the MFR's of the components of the heterophasic propylene copolymer. In most cases MFR_{AB} is essentially identical to the total MFR of the polypropylene composition.

Total MFR of the polypropylene composition must be ≤ 1.5 g/10 min because of EN 1852-1:1997/A1. According to the invention, the total MFR of the polypropylene composition is from 0.01 - 1.0 g/10 min, i.e. within the same range as the MFR_{A} of the propylene homopolymer. Preferably the total MFR of the polypropylene composition is from 0.05 - 0.8 g/10 min, more preferably 0.10 - 0.60 g/10 min, still more preferably 0.15 - 0.50 g/10 min, most preferably 0.20 - 0.45 g/10 min

Preferably the polypropylene homopolymer is isotactic. Accordingly it is appreciated that the polypropylene homopolymer has a rather high isotacticity, measured as pentad concentration [mmmm], i.e. ≥ 90 %, more preferably ≥ 92 %, still more preferably ≥ 93 % and yet more preferably ≥ 94 %. It is most preferred that the propylene homopolymer (A) has a pentad concentration [mmmm] ≥ 95 %.

The expression propylene homopolymer used in the instant invention relates to a polypropylene that consists substantially, i.e. of at least 98 wt%, preferably of at least 99 wt%, more preferably of at least 99.5 wt%, still more preferably of at least 99.8 wt% of propylene units. In a preferred embodiment only propylene units in the propylene homopolymer are detectable. The comonomer content can be determined with FT infrared spectroscopy, as described in the measurements section.

According to the present invention the heterophasic copolymer has a XCS content of from 4 - 18 wt%. The XCS content of the heterophasic copolymer is related to the amount of ethylene-propylene rubber, bit it is not necessarily exactly the same. For example, the ethylene-propylene rubber may also comprise a portion with very high ethylene concentration, which is crystalline and therefore insoluble in cold xylene. More preferably, the heterophasic copolymer has a XCS content of from 5 - 16 wt% and most preferably 6 - 14 wt%.

A further parameter, which is useful to fine tune the properties of the polypropylene composition of the present invention is the ethylene content of the XCS content of the heterophasic propylene copolymer. Accordingly, the ethylene content of the XCS content of the heterophasic propylene copolymer is in the range of from 20 - 45 wt%, preferably 25 - 40 wt%, more preferably 30 - 40 wt.

An important parameter which is used to ensure that the good impact properties of the polypropylene composition is the intrinsic viscosity (IV) of the XCS content of the heterophasic propylene copolymer. According to the invention, the IV of the XCS content of the heterophasic propylene copolymer is rather high and it is ≥ 2.5 dl/g, preferably in a range of 2.5 - 5.0 dl/g, more preferably 2.5 - 4.5 dl/g, most preferably 2.8 - 4.0 dl/g.

For the total ethylene content of the heterophasic propylene copolymer it is preferred that it is between 2 - 10 wt%, more preferably 3 - 8 wt%, still more preferably 3 - 6 wt%. This ethylene content is adjusted by the ratio between propylene homopolymer and ethylene-propylene rubber and by the ethylene content of the ethylene-propylene rubber.

According to an advantageous embodiment of the present invention the polypropylene composition comprises one or more alpha-nucleating agents.

It has been tried in the art to improve mechanical properties, in particular impact strength, of heterophasic propylene copolymers by addition of β-nucleating agents, e.g. Chinacridon pigments or earth-alkali metal salts of dicarboxylic acids, e.g. calcium pimelate. For the present invention this would reduce the stiffness of the heterophasic propylene copolymers and is therefore not favourable.

Therefore, according to a preferred embodiment of the present invention, the polypropylene composition does not comprise any β-nucleating agent.

The polypropylene composition may contain up to 1.5 wt% of alpha-nucleating agent. A lower limit of 0.0001 wt% of alpha-nucleating agent is preferred. Preferably the polypropylene composition comprises 0.001 - 1.50 wt%, more preferably 0.005 to 1.25 wt%, still more preferably 0.01 - 1.25 wt%, even more preferably 0.01 to 1.1 wt%, most preferably 0.03 - 1.0 wt% of alpha-nucleating agent.

Smaller amounts of alpha-nucleating agent than 0.0001 wt% usually do not give the desired level of effect, while with larger amounts than 1.5 wt%, although giving the desired effect, the polypropylene compositions are becoming too expensive because of the high priced nucleating agents.

The alpha-nucleating agents which may be used for the polypropylene composition of the invention include organic alpha-nucleating agents selected from the group of phosphorous based nucleating agents like phosphoric acid esters metal salts represented by formula I 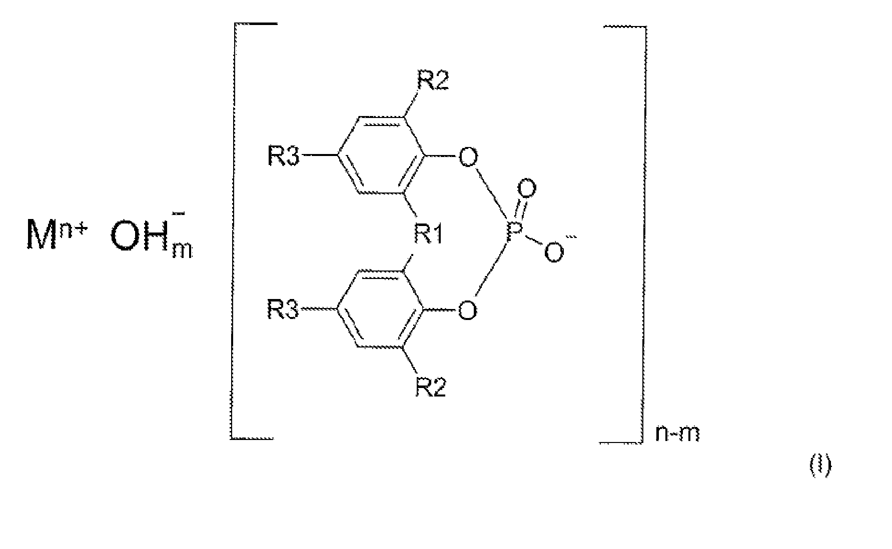 wherein R1 is oxygen, sulphur or a hydrocarbon group of 1 to 10 carbon atoms; each of R2 and R3 is hydrogen or a hydrocarbon or a hydrocarbon group of 1 to 10 carbon atoms; R2 and R3 may be the same or different from each other, two of R2, two of R3, or R2 and R3 may be bonded together to form a ring, M is a monovalent to trivalent metal atom; n is an integer from 1 to 3 and m is either 0 or 1, provided that n > m.

Preferred examples of the alpha nucleating agents represented by the above formula include sodium-2,2'-methylene-bis(4,6-di-t-butyl-phenyl)phosphate, sodium-2,2'-ethylidene-bis(4,6-di-t-butylphenyl)-phos-phate, lithium-2,2'-methylene-bis(4,6-di-t-butylphenyl)phosphate, lithium-2,2'-ethylidene-bis(4,6-di-t-butylphenyl)phosphate, sodium-2,2'-ethyli-dene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butyl-phenyl)-phosphate], calcium-bis[2,2'-thiobis(4-ethyl-6-t-butylphenyl)-phosphate], calcium-bis[2,2'-thiobis(4,6-di-t-butylphenyl)phosphate], magnesium-bis[2,2'-thiobis(4,6-di-t-butylphenyl)phosphate], magnesium-bis[2,2'-thiobis(4-t-octylphenyl)phosphate], sodium-2,2'-butylidene-bis(4,6-dimethylphenyl)phosphate, sodium-2,2'-butylidene-bis(4,6-di-t-butyl-phenyl)-phosphate, sodium-2,2'-t-octylmethylene-bis(4,6-dimethyl-phenyl)-phosphate, sodium-2,2'-t-octylmethylene-bis(4,6-di-t-butylphenyl)-phosphate, calcium-bis[2,2'-methylene-bis(4,6-di-t-butylphenyl)-phosphate], magnesium-bis[2,2'-methylene-bis(4,6-di-t-butylphenyl)-phosphate], barium-bis[2,2'-methylene-bis(4,6-di-t-butylphenyl)-phosphate], sodium-2,2'-methylene-bis(4-methyl-6-t-butylphenyl)-phosphate, sodium-2,2'-methy-lene-bis(4-ethyl-6-t-butylphenyl)phosphate, sodium(4,4'-dimethyl-5,6'-dit-butyl-2,2'-biphenyl)phosphate, calcium-bis-[(4,4'-dimethyl-6,6'-di-t-butyl-2,2'-biphenyl)phosphate], sodium-2,2'-ethyli-dene-bis(4-m-butyl-6-t-butyl-phenyl)phosphate, sodium-2,2'-methylene-bis-(4,6-di-methylphenyl)-phos-phate, sodium-2,2'-methylene-bis(4,6-di-t-ethyl-phenyl)phosphate, potassium-2,2'-ethylidene-bis(4,6-di-t-butylphenyl)-phosphate, calcium-bis[2,2'-ethylidene-bis(4,6-di-t-butylphenyl)-phosphate], magnesium-bis[2,2'-ethyli-dene-bis(4,6-di-t-butylphenyl)-phosphate], barium-bis[2,2'-ethylidene-bis-(4,6-di-t-butylphenyl)-phosphate], aluminium-hydroxy-bis[2,2'-methylene-bis(4,6-di-t-butylphenyl)phosphate], aluminium-tris[2,2'-ethylidene-bis(4,6-di-t-butylphenyl)-phosphate].

A second group of phosphorous based nucleating agents which may be used fort he present invention includes for example hydroxy-bis[2,4,8,10-tetrakis(1,1-dimethylethyl)-6-hydroxy-12H-dibenzo-[d,g]-dioxa-phoshocin-6-oxidato] aluminium (CAS 151841-65-5) and blends thereof with Li-myristate or Li-stearate.

A still further phosphorous based nucleating agent comprises sodium-di-(4-tert-butylphenyl) phosphate.

Of the phosphorous based nucleating agents sodium-2,2'-methylene-bis(4,6-di-t-butylphenyl)phosphate or hydroxy-bis[2,4,8,10-tetrakis(1,1-dimethylethyl)-6-hydroxy-12H-dibenzo-[d,g]-dioxa-phoshocin-6-oxidato] aluminium or blends thereof with Li-myristate or Li-stearate are especially preferred.

Also Sorbitol-based nucleating agents, like optionally substituted dibenzylidine sorbitol (e.g. 1,3 : 2,4 Dibenzylidene sorbitol, 1,3 : 2,4 Di(methylbenzylidene) sorbitol, 1,3 : 2,4 Di(ethylbenzylidene) sorbitol, 1,3:2,4 Bis(3,4-dimethylbenzylidene) sorbitol, etc.) can be used as nucleating agents.

A still further group of suitable nucleating agents includes resin acids (also called rosin acids) and esters and metal salts of resin acids, in particular sodium, calcium and magnesium salts.

A still further suitable nucleating agent comprises 1,2,3-trideoxy-4,6:5,7-bis-O-((4-propylphenyl) methylene) nonitol (commercially available as Millad NX 8000 from Milliken Chemical).

Further suitable alpha-nucleating agents are polymeric nucleating agents selected from the group consisting of vinylcycloalkane polymers and vinylalkane polymers. Nucleation with these polymeric nucleating agents is either accomplished by a special reactor technique, where the catalyst is prepolymerised with monomers like e.g. vinylcyclohexane (VCH), or by blending the propylene polymer with the vinyl(cyclo)alkane polymer. These methods are described in greater detail in e.g. EP 0 316 187 A2 and WO 99/24479, the disclosure of which is incorporated herein by reference.

Suitable alpha-nucleating agents for the polypropylene composition of the invention are also those alpha-nucleating agents, as described in Macromolecules 2005, 38, 3688-3695, the disclosure of which is incorporated herein by reference.

Nucleating agents such as ADK NA-11 (Methylen-bis(4,6-di-t-butylphenyl)phosphate sodium salt) and ADK NA-21 (comprising aluminium hydroxy-bis[2,4,8,10-tetrakis(1,1-dimethylethyl)-6-hydroxy-12H-dibenzo-[d,g]-dioxa-phoshocin-6-oxidato]) are commercially available from Asahi Denka Kokai and are among those which are preferably added to the polypropylene composition of the invention. Millad 3988 (3,4-Dimethylbenzylidene sorbitol), Millad 3905 and Millad 3940 available from Milliken & Company are other examples of nucleating agents that can be utilised in the invention.

Further commercial available alpha-nucleating agents, which can be used for the composition of the invention are, for example, Irgaclear XT 386 (N-[3,5-bis-(2,2-dimethylpropionylamino)-phenyl]-2,2-dimethylpropionamide) from Ciba Speciality Chemicals, Hyperform HPN-68L and Hyperform HPN-20E from Milliken & Company.

A further suitable nucleating agent which can be used for the present invention is talc.

Among all alpha-nucleating agents mentioned above, talc, aluminium hydroxy-bis[2,4,8,10-tetrakis(1,1-dimethylethyl)-6-hydroxy-12H-dibenzo-[d,g]-dioxa-phoshocin-6-oxidato] based nucleating agents like ADK NA-21, NA-21 E, NA-21 F, etc., sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], sorbitol-based nucleating agents like Millad 3988, Millad 3905 and Millad 3940 and polymeric nucleating agents selected from the group consisting of vinylcycloalkane polymers and vinylalkane polymers are particularly preferred.

It is even further preferred, that the polypropylene composition of the invention comprises an alpha-nucleating agent selected from the group of polymeric nucleating agents, selected from the group consisting of vinylcycloalkane polymers and vinylalkane polymers, preferably poly-vinylcyclohexane (pVCH), and aluminium hydroxy-bis[2,4,8,10-tetrakis(1,1-dimethylethyl)-6-hydroxy-12H-dibenzo-[d,g]-dioxa-phoshocin-6-oxidato] based nucleating agents (e.g. ADK NA-21, NA-21 E, NA-21 F), sodium-2,2'-methylene-bis(4,6-di-t-butylphenyl)phosphate (ADK NA-11) and aluminium-hydroxy-bis[2,2'-methylene-bis(4,6-di-t-butyl-phenyl)-phosphate] and talc.

Most preferred are polypropylene compositions containing as alpha-nucleating agent poly-vinylcyclohexane (pVCH), talc or mixtures thereof.

For those embodiments where the polypropylene composition comprises an alpha-nucleating agent selected from the group consisting of vinylcycloalkane polymers and vinylalkane polymers, preferably poly-vinylcyclohexane (pVCH), the typical concentration of vinyl(cyclo)alkane polymer in the polypropylene composition is from 0.0001 - 1.0 wt%, preferably 0.0001 - 0.1 wt%, more preferably 0.001 - 0.05 wt%, most preferably 0.001 - 0.01 wt%.

For those embodiments where the alpha-nucleating agent is not a polymeric nucleating agent, the nucleating agent is typically present in the polypropylene composition in an amount of from 0.001 - 1.5 wt%, preferably 0.005 - 1.25 wt%, more preferably 0.01 - 1.25 wt%, even more preferably 0.01 - 1.1 wt%, most preferably 0.03 - 1.0 wt%.

The polypropylene compositions which are used for the invention may contain various additives, which are generally used in polypropylene compositions, such as stabilizers, antioxidants, acid neutralizing agents, lubricants, processing aids, ultraviolet absorbers, pigments, provided that they do not adversely affect the desired properties of the composition.

### Description of heterophasic propylene copolymer

A heterophasic propylene copolymer according to the invention has preferably a multiphase structure with a continuous propylene homopolymer matrix and inclusions of ethylene-propylene rubber comprising at least an amorphous elastomeric phase. Optionally, the rubber also comprises some crystalline polyethylene. Normally such a heterophasic propylene copolymer is obtained by carrying out a multi-stage process, like at least a two-stage process, resulting in such heterophasic system.

Additionally it is appreciated that the polypropylene homopolymer is not chemically modified as it is known for instance from high melt strength polymers (HMS-polymer). Thus the heterophasic propylene copolymer is not cross-linked. The impact behaviour can normally also be improved by using branched polypropylenes as for instance described in EP 0 787 750, i.e. single branched polypropylene types (Y-polypropylenes having a backbone with a single long side-chain and an architecture resembles a "Y"). Such polypropylenes are characterized by rather high melt strength. A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference. Thus it is preferred that the branching index g' of the polypropylene homopolymer shall be at least 0.85, more preferably at least 0.90, yet more preferably at least 0.95, like 1.00.

The propylene homopolymer can be unimodal or multimodal, like bimodal in view of the molecular weight distribution.

The expression "multimodal" or "bimodal" used herein refers to the modality of the polymer, i.e. the form of its molecular weight distribution curve, which is the graph of the molecular weight fraction as a function of its molecular weight.

As will be explained below, the propylene homopolymer can be produced in a single step or in a sequential step process, using reactors in serial configuration and which can be operated at different reaction conditions. As a consequence, each fraction prepared in a specific reactor can have its own molecular weight distribution.

When the distribution curves from these fractions are superimposed to obtain the molecular weight distribution curve of the final polymer, these curves may show two or more maxima or at least be distinctly broadened when compared with curves for the individual fractions. Such a polymer, produced in two or more serial steps, is called bimodal or multimodal, depending on the number of steps.

Further in case the polypropylene homopolymer is of multimodal, like bimodal, in view of the molecular weight, it is appreciated that the individual fractions are present in amounts influencing the properties of the material. Accordingly it is appreciated that each of these fractions is at least present in an amount of 10 wt.-% based on the polypropylene homopolymer. Accordingly in case of a bimodal system, in particular in view of the molecular weight, the split of the two fractions is roughly 50 : 50. Thus in a preferred embodiment the polypropylene homopolymer comprises two fractions which differ in their molecular weight, wherein the first fraction having the lower molecular weight is present from 40 to 60 wt.-% and the second fraction having the higher molecular weight from 60 to 40 wt.-%.

It is further appreciated that the propylene homopolymer has a low medium flow rate (MFR), i.e. a high molecular weight. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. As a further requirement of the present invention the heterophasic propylene copolymer must comprise an ethylene-propylene rubber.

Like the polypropylene homopolymer, the ethylene-propylene rubber can be unimodal or multimodal, like bimodal. Concerning the definition of unimodal and multimodal, like bimodal, it is referred to the definition above.

According to the present invention, there is also provided a process for the manufacture of the polypropylene composition discussed above. The ethylene-propylene rubber may be blended with the polypropylene homopolymer after their polymerizations, and are subsequently mixed with any additives and optional alpha-nucleating agent. However, more desirably, the heterophasic propylene copolymer is produced in a multistage process and subsequently mixed with additives and optional alpha-nucleating agent. In a particular preferred embodiment the polypropylene homopolymer is produced in at least one slurry reactor or a slurry and a gas phase reactor and subsequently the ethylene-propylene rubber is produced in at least one gas phase reactor. Accordingly the heterophasic propylene copolymer of the instant invention can be typically produced in a cascade of up to 4 reactors, where the first reactor is a liquid bulk reactor preferably of loop design, the second reactor is either a liquid bulk reactor preferably of loop design or a gas phase reactor and all subsequent reactors are gas phase reactors preferably of fluidized bed design. The components produced in the first two reactors is(are) crystallizable propylene homopolymer(s), while the component produced in the third and/or fourth reactor is a largely amorphous copolymer with higher amounts of ethylene. According to a specific embodiment, only three reactors are utilized with either two reactors producing homopolymer and the third reactor producing ethylene-propylene rubber or with one reactor producing homopolymer and two subsequent reactors producing ethylene-propylene rubber. According to another specific embodiment, only two reactors are used, one producing homopolymer and the second producing ethylene-propylene rubber.

In the following a preferred process is described in more detail: Such a process for the manufacture of the present invention comprises the following steps:
(i) polymerizing propylene in a first reactor system, preferably comprising a bulk loop reactor and an optional gas phase reactor, to obtain a propylene homopolymer,
(ii) transferring the obtained propylene homopolymer into a second reactor system preferably comprising at least one gas phase reactor,
(iii) polymerizing propylene and ethylene in said second reactor system in the presence of the propylene homopolymer to obtain an ethylene-propylene rubber, and
(iii) mixing, in particular melt mixing, the obtained material with additives and optional alpha-nucleating agent.

The sequence (i) and (iii) can be reversed run, i.e. the ethylene-propylene rubber can be produced first and subsequently the propylene homopolymer. However, it is preferred to have the sequence (i) to (iii) as stated above.

The comonomer feeds into the various reactors may be adapted to produce the heterophasic propylene copolymer with the desired properties and the amounts of ethylene will be readily determined by the person skilled in the art.

Further details concerning the manufacture of heterophasic propylene copolymers can be derived from WO 97/40080.

In such a procedure, the catalyst system used may be varied between stages but is preferably the same for all stages. Especially preferably, a prepolymerized heterogeneous catalyst is used.

As a catalyst for the preparation of the heterophasic propylene copolymer preferably a Ziegler-Natta catalyst system is used. Such Ziegler-Natta catalyst systems are known in the art and comprise a catalyst component, a cocatalyst component and an external donor. The catalyst component of the catalyst system primarily containing magnesium, titanium, halogen and an internal donor. Electron donors control the stereospecific properties and/or improve the activity of the catalyst system. A number of electron donors including ethers, esters, polysilanes, polysiloxanes, and alkoxysilanes are known in the art. Ziegler-Natta catalysts, which are commercially available, e.g. ZN104 from Basell, may be used for producing the heterophasic propylene polymers of the invention.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds, titanium trichloride and titanium tetrachloride being particularly preferred.

It is preferred to use catalysts which can withstand the high temperatures prevailing in the loop reactor. The conventional Ziegler-Natta catalysts for isotactic polymerization of propylene generally have an operating temperature limit of around 80 °C, above which they either become deactivated or lose their stereo-selectivity. This low polymerization temperature may put a practical limit on the heat removal efficiency of the loop reactor.

According to an embodiment, a catalyst to be used in the invention is disclosed in EP 591 224 which discloses a method for preparing a procatalyst composition from magnesium dichloride, a titanium compound, a lower alcohol and an ester of phthalic acid containing at least five carbon atoms. According to EP 591 224, a trans-esterification reaction is carried out at an elevated temperature between the lower alcohol and the phthalic acid ester, whereby the ester groups from the lower alcohol and the phthalic ester change places.

Magnesium dichloride can be used as such or it can be combined with silica, e.g. by absorbing the silica with a solution or slurry containing magnesium dichloride. The lower alcohol used may be preferably methanol or ethanol, particularly ethanol.

The titanium compound used in the preparation of the procatalyst is preferably an organic or inorganic titanium compound, which is at the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the phthalic acid ester used comprises at least five carbon atoms, preferably at least eight carbon atoms. Thus, as the ester may be used e.g. propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature which is 110 to 115 °C, preferably 120 to 140 °C.

The catalyst is used together with an organometallic cocatalyst and with an external donor. Generally, the external donor has the formula

RₙR'ₘSi(R"O)₄₋ₙ₋ₘ

wherein
R and R' can be the same or different and represent a linear, branched or cyclic aliphatic, or aromatic group;
R" is methyl or ethyl;
n is an integer of 0 to 3;
m is an integer of 0 to 3; and
n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane. An organoaluminium compound is used as a cocatalyst. The organoaluminium compound is preferably selected from the group consisting of trialkyl aluminium, dialkyl aluminium chloride and alkyl aluminium sesquichloride.

According to the invention, such catalysts are typically introduced into the first reactor only. The components of the catalyst can be fed into the reactor separately or simultaneously or the components of the catalyst system can be precontacted prior to the reactor.

Such precontacting can also include a catalyst prepolymerization prior to feeding into the polymerization reactor proper. In the prepolymerization, the catalyst components are contacted for a short period with a monomer before feeding to the reactor.

If the polypropylene composition comprises a polymeric nucleating agent which is accomplished by prepolymerising the catalyst with vinyl(clyclo)hexane, this is preferably also done in the catalyst prepolymerisation mentioned above.

As described above, after the polymerisation of the heterophasic propylene copolymer the mixing with additives and optional alpha-nucleating agent follows.

### Compounding

The heterophasic propylene copolymer, additives and optional alpha-nucleating agent can be mixed, in particular melt blended, according to any conventional procedure known in the art.

The polypropylene compositions of the present invention are preferably produced by combining the heterophasic propylene copolymer and optional alpha-nucleating agents and any additives, like pigments, stabilisers, processing aids, etc. in a melt mixing device.

Melt mixing devices suited for this process are discontinuous and continuous kneaders, twin screw extruders and single screw extruders with special mixing sections and co-kneaders. The residence time must be chosen such that a sufficiently high degree of homogenisation is achieved.

### Measurement methods

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C.

### MFR

The melt flow rates were measured with a load of 2.16 kg at 230 °C for polypropylene and the inventive polypropylene compositions of the examples. The melt flow rate that quantity of polymer in grams which the test apparatus standardised to ISO 1133 extrudes within 10 minutes at a temperature of 230 °C under a load of 2.16 kg.

### Flexural Modulus

Flexural modulus was measured according to ISO 178 at 23 °C, using injection moulded test specimens as described in EN ISO 1873-2 (80 x 10 x 4 mm).

### Comonomer content

The comonomer content is measured with Fourier transform infrared spectroscopy (FTIR) calibrated with ¹³C-NMR. When measuring the comonomer content in polypropylene, a thin film of the sample (thickness about 250 mm) is prepared by hot-pressing. The area of -CH₂-absorption peak (800-650 cm-1) was measured with Perkin Elmer FTIR 1600 spectrometer. The method was calibrated by ethylene content data measured by ¹³C-NMR.

### Intrinsic Viscosity

Intrinsic Viscosity was measured according to DIN ISO 1628-1 (October 1999) in Decalin at 135 °C.

### Isotacticity

¹³C-NMR spectra are recorded on a Bruker 400 MHz spectrometer at 130 °C from samples dissolved in 1,2,4-trichlorobenzene/benzene-d6 (90 wt%/10 wt%).

The pentad analysis the assignment is done according to the methods described in literature: T. Hayashi, Y. Inoue, R. Chüjö, and T. Asakura, Polymer 29 138-43 (1988).and Chujo R, et al, Polymer 35 339 (1994).

### Differential Scanning Calorimetry (DSC)

Melt enthalpy (Hm) was measured by the DSC method according to ISO 11357-3.

### Bending Angle

Determination of the bending angle is performed according to DVS 2203-5:1999.

### Examples

The following materials were used:
A heterophasic propylene copolymer were produced in a two step process. In the first step a propylene homopolymer A (matrix phase) was polymerised in liquid propylene and in the second stage an ethylene-propylene rubber B (disperse phase) was polymerised in a gas phase reactor. As catalyst a commercially available Ziegler-Natta catalyst (which was prepolymerised with poly-vinylcyclohexane) was used together with dicyclopentyl dimethoxy silane (DCPDMS) as external donor and triethylaluminium as cocatalyst.
The heterophasic propylene copolymer has the following characteristics:
   MFR_{A} of homopolymer matrix 0.35 g/10 min, homopolymer matrix is 89 wt% of heterophasic copolymer; XCS content of heterophasic propylene copolymer 10.5 wt%, intrinsic viscosity of XCS is 3.0 dl/g, ethylene content of XCS is 32 wt%, total ethylene content of heterophasic copolymer is 4.8 wt%, MFR of heterophasic copolymer is 0.25 g/10 min, Hm of heterophasic copolymer is 110.5 J/g; total MFR of the polyproyplene composition is 0.25 g/10 min.
   Flexural Modulus of the composition is 1720 MPa.
   The heterophasic propylene copolymer was blended with the following additives:
      0.1567 wt% Tris (2,4-di-*t*-butylphenyl) phosphite
      0.2183 wt% Pentaerythrityl-tetrakis(3-(3',5'-di-tert. butyl-4-hydroxyphenyl)-propionate,
      0.1870 wt% Di-stearyl-thio-di-propionate
      0.065 wt% Calciumstearate
      0.900 wt% Talc

The polymer was mixed with the additives and nucleating agent in an intensive mixer (Henschel mixer) for 25 seconds. The composition was compounded in a twin screw extruder at a temperature of 250 °C. The strands were quenched in cold water and pelletised.

The pipes were produced by feeding the pellets into a conventional Cincinnati pipe extruder for extrusion with a line speed of about 1 m/min into diameter 110 mm pipes with a wall thickness of 10 mm.

Two pipe sections at a time were heated tool butt welded according to DVS 2207-11:1999 with the exception of the parameters listed in the following table. A bending test was performed on the welded pipes. These results are also shown in the following table.

| Example no. | Heated tool temperature T_{HT} [°C] | Heating-up time t_{H} [s] | Pressure build-up time t_{J} [s] | Bending angle |
|---|---|---|---|---|
| 1 | 235 | 120 | 1 | 55 |
| 2 | 235 | 80 | 2 | 62 |
| 3 (CE) | 220 | 240 | 4 | 40 |

## Claims

1. A process of forming a weld between abutting ends of two polypropylene pipes to be joined, which comprises
- an alignment step, wherein said polypropylene pipes are aligned in axial direction and wherein a heated tool is disposed between two ends of said polypropylene pipes such that said ends of said polypropylene pipes abut said heated tool and wherein said ends are pressed in axial direction against said heated tool using an alignment pressure p_{A} during an alignment time t_{A}, followed by
- a heating-up step, wherein each of said ends is pressed in axial direction for a heating-up time t_{H} against said heated tool using a heating-up pressure p_{H}, followed by
- a changeover step, wherein said heated tool is removed from the heated ends of said aligned polypropylene pipes within a changeover time t_{CO}, followed by
- a joining step, consisting of
- a pressure build-up step, wherein said heated ends of said axially aligned polypropylene pipes are pressed against each other using a joining pressure p_{J}, such that the joining pressure is increased from 0 to the joining pressure p_{J} during a joining pressure build-up time t_{J}, followed by
- a cooling step, wherein said joined ends of said axially aligned polypropylene pipes are pressed against each other using a cooling pressure p_{C} during a cooling time t_{C},
wherein t_{H} is not greater than 80 % of the heating-up time specified according to DVS 2207-11:1999 for the respective wall thickness and
wherein t_{J} is not greater than 60 % of the joining pressure build-up time specified according to DVS 2207-11:1999 for the respective wall thickness and
wherein the temperature T_{HT} of the heated tool is set to 230 - 245 °C and
wherein the polypropylene pipes consist of a polypropylene composition designated as PP-HM according to EN 1852-1:1997/A1.

2. Process according to claim 1, **characterised in that** t_{H} is ≤ 60 % of the heating-up time specified according to DVS 2207-11:1999 for the respective wall thickness and t_{J} is ≤ 40 % of the joining pressure build-up time specified according to DVS 2207-11:1999 for the respective wall thickness.

3. Process according to any one of the preceding claims, **characterised in that** for pipes having a wall thickness of 10 mm, t_{J} is 0.5 - 2 s and t_{H} is 70 - 150 s.

4. Process according to any one of the preceding claims, **characterised in that** the polypropylene pipes consist of a polypropylene composition comprising a heterophasic propylene copolymer having an XCS content of 4 - 18 wt% and a melting enthalpy Hₘ of ≥ 90 J/g.

5. Process according to any one of the preceding claims, **characterised in that** the polypropylene pipes consist of a polypropylene composition comprising a heterophasic propylene copolymer consisting of
A) 80 - 95 wt% of a propylene homopolymer matrix phase having an MFR_{A} of 0.01 - 1.0 g/10 min (2.16 kg/230 °C),
B) 5 - 20 wt% of an ethylene-propylene rubber disperse phase ,
the heterophasic propylene copolymer having an XCS content of 4 - 18 wt%, whereby the XCS content has an ethylene content of 25 - 45 wt% and whereby the XCS content has an intrinsic viscosity IV of ≥ 2.5 dl/g.

6. Process according to any one of the preceding claims, **characterised in that** the propylene homopolymer (A) has an isotacticity measured as concentration of [mmmm] pentads of ≥ 90 %.

7. Process according to any one of the preceding claims, **characterised in that** the polypropylene composition comprises one or more alpha-nucleating agents.

8. Process according to any one of the preceding claims, **characterised in that** the polypropylene composition comprises > 95 wt% heterophasic propylene copolymer.

9. Process according to any one of the preceding claims, **characterised in that** the polypropylene composition comprises less than 5 wt% polymeric components other than the heterophasic propylene copolymer.

10. Process according to any one of the preceding claims, **characterised in that** the heating-up time t_{H} is 6 to 15 times the wall thickness of the pipes to be joined.

11. Process according to claim 8, wherein the pipes to be joined have a wall thickness of 10 mm and the heating-up time is from 70 - 150 s.

12. Process according to any one of the preceding claims, **characterised in that** the joining pressure build-up time t_{J} is 0.5 - 5 s.
